# EUROPEAN PATENT APPLICATION

(11) **EP 3 091 241 A1**
(43) Date of publication of application: **09.11.2016**
(21) Application number: 14859583.8
(22) Date of filing: 06.11.2014
(51) Int. Cl.: F16C 32/04, H02N 15/00, F16C 39/00

(54) **AXIAL PERMANENT MAGNETIC SUSPENSION BEARING HAVING MICRO-FRICTION OR NO FRICTION OF PIVOT POINT**

(30) Priority: 08.11.2013 CN 201310552593
(71) Applicant: Li, Guokun, Lanzhou, Gansu 730030 (CN); Wang, Chaoxian, Lanzhou, Gansu 730030 (CN)
(72) Inventor: Li, Guokun, Lanzhou, Gansu 730030 (CN); Wang, Chaoxian, Lanzhou, Gansu 730030 (CN)
(74) Representative: Radünz, Ingo
(86) International application number: PCT/CN2014/090456
(87) International publication number: WO 2015/067191

(57) **Abstract**

Disclosed is an axial permanent magnetic suspension bearing having micro-friction or no friction of pivot point, comprising a support bearing (4) disposed on a vertical shaft, and a permanent magnetic suspension bearing (3) disposed on the vertical shaft, wherein the permanent magnetic suspension bearing (3) comprises a stator pull-push magnet (31) provided on a stator (1), and a rotor pull-push magnet (32) correspondingly provided on a rotor (2) by means of a soft magnetic material base (322) and separated from the stator pull-push magnet (31) by an axial gap to form a pull-push magnetic circuit, wherein said stator pull-push magnet (31) and said rotor pull-push magnet (32) are respectively composed of two or more than two annular permanent magnets provided as radially closely fitting and with magnetic poles alternating in the radial direction, and upper and lower annular permanent magnets correspondingly in the same radial position have the same magnetic strength and inverse polarity, the annular surfaces of the annular permanent magnets, which are near the vertical shaft, of the stator pull-push magnet (31) and the rotor pull-push magnet (32) are spaced from the surface of the vertical shaft by a radial distance. The present invention has small magnets, is good to manufacture, is good to install, and has a high radial restoring force, while the force of attraction is great and friction force is reduced by 98%.

## Description

### Technical Field of the Invention

The invention relates to a bearing, more particularly, to an axial permanent magnetic suspension bearing with pivot point.

### Background Art

The invention patent 01136634.6, titled as *magnetic suspension bearing,* and submitted by the first applicant of the present application in 2001, relates to a solution in which permanent magnets are used to constitute a pull-push magnetic circuit so as to form a magnetic suspension bearing without pivot point. The invention application 200710099004.X submitted in 2007, titled as *Repel push magnetic body component, complete permanent magnetism complete suspending bearing as well as combined wind power photovoltaic power generation system,* discloses a solution in which permanent magnets are used to constitute a pull-push magnetic circuit so as to form a magnetic suspension bearing without pivot point. However, the pull-push magnetic circuit used for the complete permanent magnetism and complete suspension solution is complicated in structure, rendering it difficult to adjust suspension, as compared to the case in which the pull-push magnetic circuit has good performance in magnetic transmission. In the prior art, a partly permanent magnetic suspension bearing is large in volume and heavy in weight for mechanical transmission systems with rotation speed of 50,000rpm or below, since the magnetic suspension takes a small account of the support shaft.

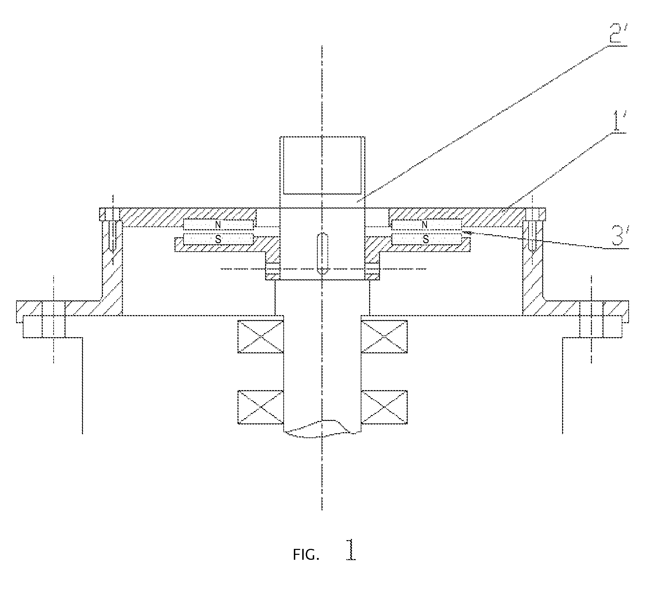

The typical axial bearing with permanent magnetic suspension in the prior art is shown in Fig. 1, in which a stator 1' and a vertical shaft (or named an upright shaft) rotor 2' are each provided with a heteropolar magnetic ring 3', so as to generate an upward suspension force for the vertical shaft; and the magnetic suspension bearing and the bearing at the lower part of the vertical shaft form a bearing system for supporting upright shaft. The magnetic rings provided in such an manner that it leads to several disadvantages as follows. First, the magnetic suspension bearing generates a partly open magnetic circuit, with an air circuit of a non-work air gap, therefore the magnetic resistance is thousand times larger than that of a soft magnetic circuit, such that the suspension force is limited. Second, the magnets used for the magnetic suspension is too large to produce and install. Third, the radial restoring force is too small to resist radial perturbations. Forth, the bearing load is low due to a small attraction force per unit area.

### Summary

The invention provides an axial permanent magnetic suspension bearing with pivot point, which has a small magnetic resistance and small magnets, is easy to manufacture and install, and has a high radial restoring force and a high attraction force, to overcome the problems associated with the prior art that non complete magnetic suspension axial bearing has a large magnetic resistance and large magnets, is difficult to manufacture and install, and has a small radial restoring force and a small attraction force.

Technical solutions of the present invention are as follows:
An axial permanent magnetic suspension bearing having micro-friction or no friction of pivot point, comprising a support bearing as pivot point disposed on a vertical shaft serving as a rotor, and a permanent magnetic suspension bearing disposed on the vertical shaft and spaced from the support bearing by an axial distance, wherein the permanent magnetic suspension bearing comprises a stator pull-push magnet provided on a stator, and a rotor pull-push magnet correspondingly provided on a rotor by means of a soft magnetic material base and separated from the stator pull-push magnet by an axial gap to form a pull-push magnetic circuit, wherein said stator pull-push magnet and said rotor pull-push magnet are respectively composed of two or more than two annular permanent magnets provided as radially closely fitting and with magnetic poles alternating in the radial direction, and upper and lower annular permanent magnets correspondingly in the same radial position have the same magnetic strength and inverse polarity, wherein the axial gap is within an effective range of magnetic force of the two pull-push magnets, the stator pull-push magnet is above the rotor pull-push magnet, the annular surfaces of the annular permanent magnets, which are near the vertical shaft, of the stator pull-push magnet and the rotor pull-push magnet are spaced from the surface of the vertical shaft by a radial distance.

The ratio of the radial distance to the axial gap is 2 to 5.

The ratio of the radial distance to the axial gap is 2.5 to 3.5.

Said support bearing disposed on the vertical shaft is located above the permanent magnetic suspension bearing.

Said support bearing disposed on the vertical shaft is located below the permanent magnetic suspension bearing.

The annular permanent magnets each have a same radial width.

Said stator is made of soft magnetic material, and the radial distance separating said stator from the vertical shaft is slightly shorter than the distance separating the innermost annular permanent magnet, which is near the vertical shaft, of the stator pull-push magnet from the vertical shaft.

Said soft magnetic material base is of a annular structure, the part of which used to fix the annular permanent magnets has a radial length slightly longer than total radial length of the annular permanent magnets that are used to form the rotor pull-push magnet.

Technical effects:
The present invention improves magnetic suspension structure in the axial bearing with magnetic suspension in the prior art. Two heteropolar magnetic rings are replaced by two pull-push magnets, that is, a stator pull-push magnet and a rotor pull-push magnet that both are fixed to soft magnetic material base. Said stator pull-push magnet and the rotor pull-push magnet are respectively composed of two or more than two annular permanent magnets provided as radially closely fitting and with magnetic poles alternating in the radial direction. This kind of magnetic structure only has working magnetic gap, and does not have non-working magnetic gap. Further, innermost annular magnets of said two pull-push magnets are each spaced from the surface of the vertical shaft by a radial distance, and magnetic circuit formed by the magnets can form a short circuit through a self-circuit, so magnetic resistance of magnetic circuit is decreased remarkably and efficiency is improved largely. Under the situation of the same load, each magnet component in the present invention is small and easy to manufacture and install, since magnetic resistance is decreased largely. The radial restoring force of the magnetic suspension bearing in the present invention is increased by at least 4 times, since the pull-push magnetic circuit is further highly stable. At the same time, it has a great attraction force, for example, magnets weighting 1.2 kilograms (1.8H) can suspend 284 kilograms weight, in which case the bearing load is decreased by 98% and the frictional force is reduced by 98%.

### Brief Description of the Drawings

Figure 1 is the schematic structural view of conventional axial bearing with permanent magnetic suspension.
Figure 2 is the schematic structural view according to the present invention.
   wherein,
   1',1- stator
   2',2 - vertical shaft rotor
   3' - heteropolar magnetic rings
   3 - permanent magnetic suspension bearing
   31- stator pull-push magnet
   32 - rotor pull-push magnet
   322- base
   4 - support bearing

### Detailed Description of the Embodiments

Hereinafter the invention will be further explained with reference to the accompanying figures.

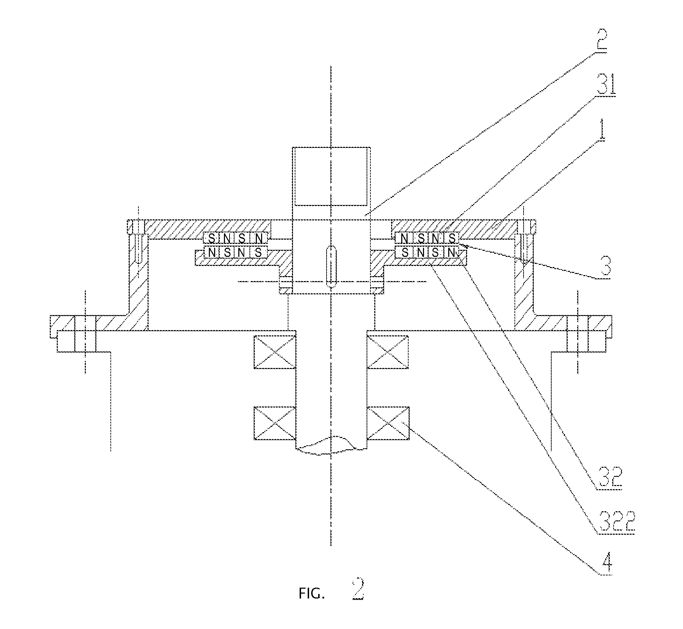

Fig. 2 is the schematic structural view according to the present invention. Comparing Fig.2 with Fig.1, the heteropolar magnetic rings 3' in Fig.1 are replaced by the permanent magnetic suspension bearing 3 of the present invention. That is: a stator pull-push magnet 31 is located on the upper of a vertical shaft 2 and fixed to the stator, a rotor pull-push magnet 32 is located below the stator pull-push magnet 31 and axially separated from the stator pull-push magnet 31 to form a pull-push magnetic circuit, wherein the rotor pull-push magnet is fixed by means of a soft magnetic material base 322 which is fixed to the vertical shaft 2.The stator pull-push magnet 31 and the rotor pull-push magnet 32 are respectively composed of two or more than two annular permanent magnets provided as radially closely fitting and with magnetic poles alternating in the radial direction. Preferably, each annular permanent magnet arranged along the radial direction has the same radial width, and upper and lower annular permanent magnets correspondingly in the same radial position have the same magnetic strength and inverse polarity. And the axial gap is within an effective range of magnetic force of the two pull-push magnets. In an embodiment according to the invention as shown in Fig. 2, each pull-push magnet has four annular permanent magnets with magnetic poles alternating in the radial direction, polarities of the rotor pull-push magnet 32 are N, S, N, S along the radial direction from the axis to outside, and polarities of the stator pull-push magnet 31 are S, N, S, N along the radial direction from the axis to outside, and it is possible each pull-push magnet has two or three or six annular permanent magnets. The rotor pull-push magnet 32 is fixed to its soft magnetic material base 322, the stator 1 used for fixing the stator pull-push magnet 31 is made of soft magnetic material. The stator made of soft magnetic material and the soft magnetic material base 322 are both provided on the back of the annular permanent magnets, namely, are both provided on the back surfaces opposite to the facing surfaces of annular permanent magnets with opposite polarities in the axial direction. Back surface of each annular permanent magnet is fixed to the soft magnetic material, and the stator made of soft magnetic material and the soft magnetic material base 322 are both ring shape, the part of which used to fix the annular permanent magnets has a radial length slightly longer than total radial length of the annular permanent magnets that are used to form the stator pull-push magnet 31 and rotor pull-push magnet 32 respectively. As for the stator pull-push magnet 31, the radial distance separating the stator 1 from the vertical shaft 2 is slightly shorter than the distance separating the innermost annular permanent magnet, which is near the vertical shaft 2, of the stator pull-push magnet 31 from the vertical shaft. The soft magnetic material base 322 of the rotor pull-push magnet 32 and the vertical shaft 2 is fixed together. In this embodiment, the support bearing 4 serving as pivot point on the vertical shaft 2 serving as the rotor is located below the permanent magnetic suspension bearing 3 and is also located at the lower part of the vertical shaft 2. The vertical shaft 2 could be served as a transmission shaft of a wind motor, for example, a wind wheel could be arranged on the upper of the support bearing 4 and magnetic suspension bearing 3 on the vertical shaft 2, and drives a rotatable component disposed at other parts of the vertical shaft 2 to rotate for outputting kinetic energy. Alternatively, the power input mechanism could also be located below the support bearing 4 and the magnetic suspension bearing 3, in which case the power output mechanism could be located above the support bearing 4 and the magnetic suspension bearing 3. Furthermore, both the power input mechanism and the power output mechanism could be disposed between the two bearings, depending on the practical needs. The support bearing 4 could as well be disposed above the magnetic suspension bearing 3.

As compared to the prior art as shown in Fig. 1, two heteropolar magnetic rings are replaced by two pull-push magnets, that is, a stator pull-push magnet 31 fixed to the stator and a rotor pull-push magnet 32 fixed to soft magnetic material base 322. This kind of magnetic structure only has working magnetic gap, and does not have non-working magnetic gap (there are a lot of non-working magnetic gap in the prior art shown in Fig.1). Further, the annular surfaces, which are near the vertical shaft 2, of annular magnets, which are near the vertical shaft 2, of the stator pull-push magnet 31 and the rotor pull-push magnet 32 are each spaced from the surface of the vertical shaft 2 by a radial distance, so magnetic circuit formed by magnets can form a short circuit through a self-circuit (in the patent 200710099004 submitted by the first applicant, there as well is a radial pull-push magnet arranged on the vertical shaft, the magnetic resistance remains relatively large due to the facts that magnetic rings directly disposed to the shaft and thereby the magnetic circuit cannot form a short circuit through a self-circuit), therefore magnetic resistance of magnetic circuit is decreased remarkably and efficiency is improved largely. Under the situation of the same load, each magnet component in the present invention is small and easy to manufacture and install, since magnetic resistance is decreased largely. Because the radial pull-push magnetic circuit is further highly stable along the radial direction, the radial restoring force of the magnetic suspension bearing in the present invention is increased by at least 4 times, an axial permanent magnetic suspension bearing having micro-friction or no friction of pivot point whose radial restoring force is increased to 16 times has been designed. At the same time, it has a great attraction force, for example, magnets weighting 1.2 kilograms (48H) can suspend 284 kilograms weight, in which case the bearing load is decreased by 98% and the frictional force is reduced by 98%. Taking into account weight itself and loaded weight of the vertical shaft, extremely small support from the support shaft is needed, wherein the support bearing simply acts as pivot point, by means of designing the magnetic suspension bearings with different loaded weight. And thereby the vertical shaft can be suspended and in a micro-friction or no friction way.

Preferably, the ratio of the radial distances, separating the annular permanent magnets which are near the vertical shaft, of the stator pull-push magnet 31 and the rotor pull-push magnet 32 from the surface of the vertical shaft 2, to said axial gap is 2 to 5. The ratio of said radial distances to the said axial gap is 2.5 to 3.5.

The support bearing 4 simply acting as pivot point could take an oil-lubricating bearing, or a self-lubricating ceramic bearing. Since the bearing load is balanced by the magnetic attraction force with the opposite direction, the positive pressure acting to the bearing is zero. In this way, friction and abrasion are eliminated, and therefore energy consumption is remarkably decreased. The bearing is maintenance free, since the friction is decreased to 1/50 and hence the life span of the bearing is prolonged to 50 times. Furthermore, there is no need to exchange the bearing, so the stubborn problem of frequent exchanging the bearing due to large load and abrasion is solved. As compared to the conventional magnetic suspension bearings, the magnetic suspension bearing according to the invention is extremely cheap in cost, and facilitates manufacture and install. It can be widely used in various industries of the vertical shaft transmission, production efficiency is improved largely, production cost is reduced and economic and social benefits are raised largely.

## Claims

1. An axial permanent magnetic suspension bearing having micro-friction or no friction of pivot point, comprising a support bearing as pivot point disposed on a vertical shaft serving as a rotor, and a permanent magnetic suspension bearing disposed on the vertical shaft and spaced from the support bearing by an axial distance, wherein the permanent magnetic suspension bearing comprises a stator pull-push magnet provided on a stator, and a rotor pull-push magnet correspondingly provided on a rotor by means of a soft magnetic material base and separated from the stator pull-push magnet by an axial gap to form a pull-push magnetic circuit, wherein said stator pull-push magnet and said rotor pull-push magnet are respectively composed of two or more than two annular permanent magnets provided as radially closely fitting and with magnetic poles alternating in the radial direction, and upper and lower annular permanent magnets correspondingly in the same radial position have the same magnetic strength and inverse polarity, wherein the axial gap is within an effective range of magnetic force of the two pull-push magnets, the stator pull-push magnet is above the rotor pull-push magnet, the annular surfaces of the annular permanent magnets of the stator pull-push magnet and the rotor pull-push magnet which are near the vertical shaft are spaced from the surface of the vertical shaft by a radial distance.

2. The axial permanent magnetic suspension bearing having micro-friction or no friction of pivot point according to Claim 1, wherein the ratio of the radial distance to the axial gap is 2 to 5.

3. The axial permanent magnetic suspension bearing having micro-friction or no friction of pivot point according to Claim 2, wherein the ratio of the radial distance to the axial gap is 2.5 to 3.5.

4. The axial permanent magnetic suspension bearing having micro-friction or no friction of pivot point according to any of Claims 1 to 3, wherein said support bearing disposed on the vertical shaft is located above or below the permanent magnetic suspension bearing.

5. The axial permanent magnetic suspension bearing having micro-friction or no friction of pivot point according to any of Claims 1 to 3, wherein the annular permanent magnets each have a same radial width.

6. The axial permanent magnetic suspension bearing having micro-friction or no friction of pivot point according to Claim 4, wherein the annular permanent magnets each have a same radial width.

7. The axial permanent magnetic suspension bearing having micro-friction or no friction of pivot point according to any of Claims 1 to 3, wherein said stator is made of soft magnetic material, and the radial distance separating said stator from the vertical shaft is slightly shorter than the distance separating the innermost annular permanent magnet, which is near the vertical shaft, of the stator pull-push magnet from the vertical shaft.

8. The axial permanent magnetic suspension bearing having micro-friction or no friction of pivot point according to Claim 4, wherein said stator is made of soft magnetic material, and the radial distance separating said stator from the vertical shaft is slightly shorter than the distance separating the innermost annular permanent magnet, which is near the vertical shaft, of the stator pull-push magnet from the vertical shaft.

9. The axial permanent magnetic suspension bearing having micro-friction or no friction of pivot point according to any of Claims 1 to 3, wherein said soft magnetic material base is of a annular structure, the part of which used to fix the annular permanent magnets has a radial length slightly longer than total radial length of the annular permanent magnets that are used to form the rotor pull-push magnet.

10. The axial permanent magnetic suspension bearing having micro-friction or no friction of pivot point according to Claim 4, wherein said soft magnetic material base is of a annular structure, the part of which used to fix the annular permanent magnets has a radial length slightly longer than total radial length of the annular permanent magnets that are used to form the rotor pull-push magnet.
